# FASCICULE DE BREVET EUROPEEN

(11) **EP 0 568 689 B1**
(45) Date de publication et mention de la délivrance du brevet: **29.01.1997**
(21) Numéro de dépôt: 93900256.4
(22) Date de dépôt: 16.11.1992
(51) Int. Cl.: H02H 7/04

(54) **APPAREIL ELECTRONIQUE DE MESURE DU FONCTIONNEMENT D'UN TRANSFORMATEUR A HUILE**
ELEKTRONISCHE FUNKTIONSMESSVORRICHTUNG EINES OELGEFUELLTEN TRANSFORMATORS
ELECTRONIC APPARATUS FOR MEASURING THE ACTIVITY OF AN OIL TRANSFORMER

(30) Priorité: 22.11.1991 FR 9114600
(43) Date de publication de la demande: 10.11.1993
(73) Titulaire: PIOCH S.A., 06515 Carros Cédex (FR)
(72) Inventeur: PIOCH, Olivier, F-06200 Nice (FR)
(74) Mandataire: Polus, Camille
(86) Numéro de dépôt international: FR9201067
(87) Numéro de publication internationale: WO9310587

(56) Documents cités:
- EP-A- 0 219 790
- AT-B- 306 845
- DD-A- 241 162
- FR-A- 2 273 390
- US-A- 4 223 364
- US-A- 4 654 806
- PATENT ABSTRACTS OF JAPAN vol. 11, no. 134 (P-571)28 Avril 1987 & JP-A-61 274 274

## Description

La technologie du transformateur à huile est de plus en plus performante et nécessite une protection adaptée contre les risques de détérioration et de destruction du transformateur dus à un incident de fonctionnement.

US-A-4 654 806 divulgue un appareil de protection d'un transformateur à huile comportant des moyens de mesure en continu d'un ensemble de paramètres de fonctionnement du transformateur et un ensemble électronique de mémorisation en continu, de visualisation, de surveillance et de traitement des mesures effectuées. Cet ensemble électronique est placé dans une armoire séparée du transformateur.

L'objet de la présente invention est un appareil de protection tel que défini par la revendication 1, comportant un corps étanche destiné à être fixé sur le transformateur et concentrant toutes les fonctions de mesure, de mémorisation, de visualisation et de déclenchement d'alarme et d'arrêt de paramètres de fonctionnement du transformateur à huile.

Les mesures de valeur des paramètres de fonctionnement sont des mesures réelles et continues sur 24 heures. L'appareil mesure et mémorise de manière simultanée et continue sur 24 heures les valeurs de la température et du niveau du diélectrique contenu dans le transformateur, de la pression à l'intérieur du transformateur et de l'intensité du courant au secondaire du transformateur grâce à des appareillages indépendants reliés à un système électronique (1) et fonctionnant en permanence, l'appareil étant alimenté par le transformateur qui l'accueille ou par son armoire de commande.

La température du liquide diélectrique contenu dans le transformateur est mesurée avec une précision de +/-0,5°C grâce à un capteur électronique (2) situé à l'extrémité d'un circuit imprimé vertical (3) fixé sous la base de la partie supérieure (4) démontable de l'appareil et pénétrant de 30 mm sous la paroi interne du transformateur (5). Cette position du capteur proche de la zone la plus chaude du transformateur permettant ainsi une mesure optimale de la température du diélectrique est rendue possible grâce à la matière plastique composant le corps de l'appareil qui assure son isolation thermique et électrique, et grâce à la faible pénétration de la partie inférieure de l'appareil située sous les pattes de fixation (6) à l'intérieur du transformateur.

La pression à l'intérieur du transformateur est mesurée avec une précision de +/-0,02 bar grâce à un capteur électronique (7) fixé sous la base de la partie supérieure (4) de l'appareil et situé dans la partie inférieure (8) de l'appareil qui communique avec l'intérieur du transformateur. Le niveau du liquide diélectrique à l'intérieur du transformateur est mesuré avec une précision de 5cm3 et est donné en pourcentage du volume contenu dans la partie inférieure (8) de l'appareil grâce à des capteurs électroniques (9) placés sur le circuit imprimé vertical (3) et actionnés par un aimant (10) noyé dans un flotteur (11) coulissant autour du circuit imprimé vertical (3), le tout étant situé dans la partie inférieure (8) de l'appareil qui est transparente et qui sert de réservoir de diélectrique du fait de sa communication avec l'intérieur du transformateur.

A cette mesure du niveau du diélectrique est associée une mesure de la vitesse de variation de ce niveau à partir de la mesure du temps écoulé entre deux positions successives du flotteur grâce à une horloge électronique située dans le système électronique (1) permettant ainsi de mesurer des variations rapides de niveau dues à un dégagement gazeux dans le transformateur ou à une fuite du liquide diélectrique.

L'intensité du courant au secondaire du transformateur est mesurée grâce à un transformateur d'intensité (12) entourant les bornes du secondaire (13) et solidaire de la traversée basse tension (de type rectangulaire ou autre) du transformateur à contrôler. A cette mesure d'intensité est associée une mesure électronique du temps pendant lequel cette intensité est appliquée permettant de différencier les surintensités supportables de celles qui sont dangereuses pour le transformateur en fonction du temps pendant lequel elles sont appliquées.

A cette fonction de mesure des paramètres en continu est associée une fonction de mémorisation en continu de ces mesures grâce à une mémoire électronique située dans le système électronique (1) qui mémorise les mesures pendant 24 heures. En cas de coupure du transformateur, les données mémorisées pendant les dernières 24 heures sont sauvegardées pendant plusieurs années.

A ces fonctions de mesure et de mémorisation en continu est associée une fonction de visualisation des données mémorisées sur commande d'un intervenant grâce au système électronique (1) relié soit à un clavier de commande (14) et à un afficheur (15) situés sur la partie supérieure (4) de l'appareil permettant de voir directement sur l'appareil uniquement la dernière valeur mémorisée pour le paramètre demandé, soit à deux sorties (16) et (17) assurant les mêmes fonctions que le clavier de commande (14) et permettant de connecter l'appareil à un périphérique (de type ordinateur, imprimante, minitel ou autre) qui visualise toutes les valeurs mémorisées dans le temps et qui peut également interpréter ces valeurs sous forme de courbes et de tableaux correspondant au fonctionnement du transformateur. La sortie (16) située sur le dessus de l'appareil permet grâce au branchement d'un périphérique une lecture sur le site d'installation du transformateur. La sortie (17) située sur le côté de l'appareil permet grâce au branchement du périphérique une lecture à distance de la cellule du transformateur pendant le fonctionnement du transformateur et en toute sécurité.

En cas d'arrêt du transformateur, les données mémorisées peuvent être visualisées sans brancher d'appareil sur le secteur, l'appareil fonctionnant en mode veille pendant 10 heures grâce à un accumulateur. Les données concernant le dégagement gazeux ne peuvent être visualisées que par l'intermédiaire du périphérique connecté à l'appareil qui permet de tracer des courbes et des tableaux de données.

A ces fonctions de mesure, de mémorisation en continu et de visualisation est associé le pilotage d'une alarme pour chaque paramètre grâce à un seuil programmé par l'installateur de l'appareil au moyen du clavier (14) situé sur l'appareil et qui lorsqu'il est atteint pour le paramètre considéré actionne un relais permettant de déclencher au moyen d'une sortie (18) une alarme extérieure à l'appareil (de type sirène, ampoule etc...). L'alarme reste en action tant que la valeur du paramètre est supérieure au seuil d'alarme.

Le dégagement gazeux n'est assorti d'aucun seuil d'alarme, mais celui-ci étant dû à un court circuit au niveau des bobinages entraînant la dégradation des isolants, il agira sur les valeurs d'intensité et de niveau de liquide diélectrique qui elles sont pourvues de seuils d'alarme.

A ces fonctions de mesure, de mémorisation, de visualisation et de pilotage d'alarme est associé le pilotage d'un système d'arrêt du transformateur grâce à un seuil de coupure programmé par l'installateur de l'appareil pour chaque paramètre au moyen du clavier de commande (14) et qui lorsqu'il est atteint actionne un relais permettant de déclencher au moyen d'une sortie (19) l'arrêt du transformateur.

En ce qui concerne le paramètre de l'intensité, le seuil d'arrêt consiste en un seuil maximal d'intensité associé à un temps maximal pendant lequel ce seuil maximal peut être appliqué.

Le dégagement gazeux n'est assorti d'aucun seuil de coupure mais il agira sur les valeurs de niveau de diélectrique et de l'intensité qui sont pourvues de seuil d'arrêt.

Une horloge intégrée au système électronique (1) permet de visualiser le temps écoulé depuis 1.'arrêt du transformateur.

Le système électronique (1) permet à quatre diodes électroluminescentes (20) situées sur l'appareil et correspondant aux quatre paramètres de s'allumer à tour de rôle en cas de fonctionnement et de s'éteindre en cas d'arrêt du transformateur, ne laissant clignoter que la diode correspondant au paramètre en cause, permettant ainsi de déterminer le paramètre à l'origine de l'arrêt du transformateur.

Un purgeur (21) muni d'un clapet et situé sur le côté de l'appareil permet de purger le transformateur en cas de surpression à l'intérieur du transformateur. Dans l'hypothèse où le niveau du diélectrique est trop bas, que le transformateur est froid et que l'on ne dispose pas de liquide diélectrique pour réajuster le niveau, le purgeur permet en le reliant à une pompe aspirante de faire monter le niveau en créant une dépression à l'intérieur du transformateur.

L'appareil est fixé directement sur le couvercle du transformateur au moyen de pattes de fixation (6) adaptées à un trou préexistant sur le couvercle du transformateur (5), ce qui rend l'installation de l'appareil facile et peu coûteuse. L'appareil est composé d'une enveloppe moulée en matière plastique en deux parties : une partie supérieure (4) qui se visse d'un quart de tour sur une partie inférieure (8). La partie supérieure sert de bouchon de remplissage du transformateur. La partie inférieure (8) a sa partie inférieure sous les pattes de fixation qui pénètre à l'intérieur du transformateur. Le principal utilisateur de l'appareil est le fabricant du transformateur qui le fixe sur le transformateur et qui déterminera et programmera les seuils d'alarme et de coupure pour chaque paramètre en fonction des caractéristiques du transformateur à équiper grâce au clavier de commande (14) situé sur l'appareil. L'appareil est alimenté au moyen du cable d'entrée (22) par le transformateur qui l'accueille ou par son armoire de commande et peut supporter des surtensions allant jusqu'à 380 Volts pendant une courte période. L'étanchéité de l'appareil résultant de sa conception et de la matière plastique le composant permet de le monter indifféremment sur des transformateurs en cabine ou à l'air libre.

Les alarmes et le système d'arrêt seront reliés à l'appareil par l'installateur du transformateur. Toute intervention postérieure à l'installation du transformateur pourra avoir lieu aisément grâce au clavier de commande (14) ou au périphérique branché sur l'appareil par l'installateur du transformateur.

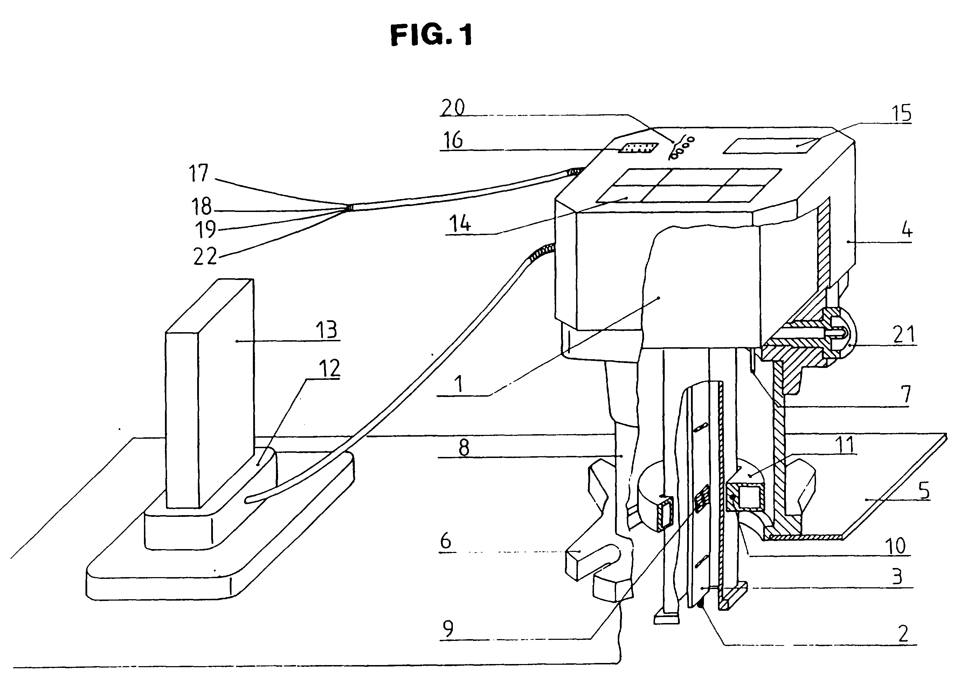

La figure 1 représente l'appareil fixé sur le couvercle du transformateur (5) grâce aux pattes de fixation (6) et relié à un transformateur d'intensité (12) entourant les bornes du secondaire (13) du transformateur (5). La partie supérieure (4) de l'appareil comprend le système électronique (1), le clavier de commande (14), l'afficheur (15), les diodes (20) correspondant aux quatre paramètres de fonctionnement, les sorties (16) et (17) permettant de brancher un périphérique à l'appareil, les sorties (18) et (19) permettant de brancher des systèmes d'alarme et d'arrêt extérieurs à l'appareil, l'entrée (22) alimentant l'appareil. La partie inférieure de l'appareil comprend le circuit imprimé vertical (3) sur lequel sont fixés les capteurs de température (2) et de niveau (9) du liquide diélectrique contenu dans le transformateur (5) et autour duquel coulisse le flotteur (11) contenant l'aimant (10) ainsi que le capteur de pression (7) et le purgeur (21).

## Revendications

1. Appareil de protection d'un transformateur à huile destiné à être fixé sur le couvercle (5) du transformateur à protéger, comportant un corps étanche composé d'une part d'une partie inférieure (8) destinée à être fixée sur le transformateur, cette partie inférieure (8) ayant une extrémité inférieure destinée à pénètrer à l'intérieur du transformateur et dans laquelle sont situés des moyens (2, 3, 7, 9, 10) de mesure en continu d'un ensemble de paramètres de fonctionnement de celui-ci, et d'autre part d'une partie supérieure (4) fixée de façon démontable sur la partie inférieure (8) et pourvue d'un ensemble électronique (1) de mémorisation en continu, de visualisation, de surveillance et de traitement des mesures de paramètres effectuées par lesdits moyens de mesure (2, 3, 7, 9, 10).

2. Appareil de protection selon la revendications 1, caractérisé en ce que la partie inférieure (8) et la partie supérieure (4) du corps de l'appareil de protection comportent une enveloppe moulée en matière plastique thermiquement et électriquement isolante, la partie supérieure (4) se vissant d'un quart de tour sur la partie inférieure (8).

3. Appareil de protection selon la revendication 2, caractérisé en ce que la partie inférieure (8) est transparente.

4. Appareil de protection selon l'une quelconque des revendications précédentes, caractérisé en ce que lesdits moyens de mesure en continu comportent des capteurs électroniques de niveau (9) du liquide diélectrique du transformateur, disposés sur un circuit imprimé vertical (3).

5. Appareil de protection selon la revendication 4, caractérisé en ce que la partie inférieure comporte un flotteur (11) incorporant un aimant (10), ledit flotteur (11) étant monté coulissant autour du circuit imprimé vertical (3), de sorte que l'aimant (10) actionne les capteurs de niveau (9) afin de produire une mesure en continu du niveau du liquide diélectrique du transformateur.

6. Appareil de protection selon la revendication 5, caractérisé en ce que la mesure en continu du niveau de diélectrique est associée à une mesure de la vitesse de variation dudit niveau à partir du temps écoulé entre deux positions successives du flotteur (11), ce temps étant mesuré par une horloge électronique située dans l'ensemble électronique (1).

7. Appareil de protection selon l'une quelconque des revendications 4 à 6, caractérisé en ce que lesdits moyens de mesure en continu comportent un capteur électronique de température (2) du liquide diélectrique du transformateur, situé à l'extrémité inférieure du circuit imprimé vertical (3).

8. Appareil de protection selon l'une quelconque des revendications précédentes, caractérisé en ce qu'il comporte des moyens de mesure (12) du courant secondaire du transformateur, l'intensité de courant secondaire mesurée étant associée à la mesure du temps pendant lequel cette intensité est appliquée, de façon à différencier les surintensités supportables de celles qui sont dangereuses pour le transformateur.

9. Appareil de protection selon l'une quelconque des revendications précédentes, caractérisé en ce qu'il comporte des moyens de mesure en continu de la pression du liquide diélectrique du transformateur, sous la forme d'un capteur électronique de pression (7) fixé sous une base de la partie supérieure (4) et situé dans la partie inférieure (8) destinée à communiquer avec l'intérieur du transformateur.

10. Appareil de protection selon l'une quelconque des revendications précédentes, caractérisé en ce que l'ensemble électronique (1) comporte des moyens électroniques de mémorisation des mesures de paramètres effectuées en continu, des moyens de visualisation des données mémorisées disposés sur l'appareil, incluant un clavier de commande (14), un afficheur (15) et des diodes électroluminescentes (20) correspondant à chacun des paramètres mesurés , et des moyens (16,17) de connexion à des périphériques de visualisation et de traitement externes des données mémorisées.

## Patentansprüche

1. Schutzvorrichtung für einen ölgefüllten Transformator, die dazu bestimmt ist, auf dem Deckel (5) des zu schützenden Transformators befestigt zu werden, bestehend aus einem dichten Gehäuse, einerseits bestehend aus einem unteren Teil (8), der dazu bestimmt ist, auf dem Transformator befestigt zu werden, wobei dieser untere Teil (8) ein unteres Ende aufweist, das dazu bestimmt ist, in das Innere des Transformators einzudringen und in dem Mittel (2, 3, 7, 9, 10) zur kontinuierlichen Messung von Betriebsparametern desselben angeordnet sind, und andererseits aus einem oberen Teil (4), der abnehmbar auf dem unteren Teil (8) montiert ist und mit einer Elektronikeinheit (1) zur kontinuierlichen Speicherung, Anzeige, Überwachung und Bearbeitung der durchgeführten Parametermessungen durch diese Meßhilfsmittel (2, 3, 7, 9, 10) versehen ist.

2. Schutzvorrichtung nach Anspruch 1, dadurch gekennzeichnet, daß der untere Teil (8) und der obere Teil (4) des Gehäuses der Schutzvorrichtung eine thermisch und elektrisch isolierende geformte Hülle aus Kunststoff umfassen, wobei der obere Teil (4) mit einer Viertelumdrehung auf den unteren Teil (8) aufgeschraubt wird.

3. Schutzvorrichtung nach Anspruch 2, dadurch gekennzeichnet, daß der untere Teil (8) transparent ist.

4. Schutzvorrichtung nach einem der vorhergehenden Ansprüche, dadurch gekennzeichnet, daß die Mittel zur kontinuierlichen Messung elektronische Fühler für das Niveau (9) der dielektrischen Flüssigkeit des Transformators umfassen, die auf einer vertikalen gedruckten Schaltung (3) angeordnet sind.

5. Schutzvorrichtung nach Anspruch 4, dadurch gekennzeichnet, daß der untere Teil einen Schwimmer (11) umfaßt, der einen Magneten (10) enthält, wobei der Schwimmer (11) gleitend um die vertikale gedruckte Schaltung (3) montiert ist, so daß der Magnet (10) die Niveaufühler (9) betätigt, um eine kontinuierliche Messung des Niveaus der dielektrischen Flüssigkeit des Transformators zu ermöglichen.

6. Schutzvorrichtung nach Anspruch 5, dadurch gekennzeichnet, daß die kontinuierliche Messung des Niveaus des Dielektrikums mit einer Messung der Geschwindigkeit der Veränderung dieses Niveaus ausgehend von der Zeit verbunden ist, die zwischen zwei aufeinanderfolgenden Positionen des Schwimmers (11) vergangen ist, wobei diese Zeit durch eine elektronische Uhr gemessen wird, die sich in der elektronischen Einheit (1) befindet.

7. Schutzvorrichtung nach einem der Ansprüche 4 bis 6, dadurch gekennzeichnet, daß die Mittel zur kontinuierlichen Messung einen elektronischen Fühler für die Temperatur (2) der dielektrischen Flüssigkeit des Transformators umfassen, der sich am unteren Ende der vertikalen gedruckten Schaltung (3) befindet.

8. Schutzvorrichtung nach einem der vorhergehenden Ansprüche, dadurch gekennzeichnet, daß sie Mittel zur Messung (12) des Sekundärstroms des Transformators umfaßt, wobei die gemessene Sekundärstromstärke mit der Messung der Zeit verbunden wird, während der diese Stromstärke angelegt wird, so daß die noch möglichen Überstromstärken von jenen unterschieden werden, die für den Transformator gefährlich sind.

9. Schutzvorrichtung nach einem der vorhergehenden Ansprüche, dadurch gekennzeichnet, daß sie Mittel zur kontinuierlichen Messung des Drucks der dielektrischen Flüssigkeit des Transformators in Form eines elektronischen Druckfühlers (7) umfaßt, der unter einer Unterfläche des oberen Teils (4) befestigt ist und sich in dem unteren Teil (8) befindet, der dazu bestimmt ist, mit dem Inneren des Transformators in Verbindung zu stehen.

10. Schutzvorrichtung nach einem der vorhergehenden Ansprüche, dadurch gekennzeichnet, daß die Elektronikeinheit (1) elektronische Mittel zur Speicherung der kontinuierlich durchgeführten Parametermessungen, Mittel zur Anzeige der gespeicherten Daten, die auf der Vorrichtung angeordnet sind, bestehend aus einer Steuertastatur (14), einem Anzeigegerät (15) und Leuchtdioden (20), die jedem der gemessenen Parameter entsprechen, und Mittel (16, 17) für den Anschluß an externe Peripheriegeräte zur Anzeige und Bearbeitung der gespeicherten Daten umfassen.

## Claims

1. Apparatus for protection of an oil-cooled transformer intended to be fixed on the cover (5) of the transformer to be protected, including an impervious body composed on the one hand of a lower part (8) intended to be fixed on the transformer, this lower part (8) having a lower end which is intended to penetrate the interior of the transformer and in which are located means (2, 3, 7, 9, 10) for continuous measurement of a set of operating parameters thereof, and on the other hand an upper part (4) which is removably fixed on the lower part (8) and provided with an electronic assembly (1) for continuous storage, display, monitoring and processing of the measurements of parameters effected by the said measurement means (2, 3, 7, 9, 10).

2. Device for protection as claimed in Claim 1, characterised in that the lower part (8) and the upper part (4) of the body of the protecting apparatus include a case moulded from plastics material which is thermally and electrically insulating, the upper part (4) being screwed by a quarter turn on the lower part (8).

3. Device for protection as claimed in Claim 2, characterised in that the lower part (8) is transparent.

4. Apparatus for protection as claimed in any one of the preceding claims, characterised in that the said means for continuous measurement include electronic sensors (9) for the level of the dielectric liquid of the transformer, disposed on a vertical printed circuit (3).

5. Device for protection as claimed in Claim 4, characterised in that the lower part includes a float (11) incorporating a magnet (10), the said float (11) being mounted so as to slide about the vertical printed circuit (3) in such a way that the magnet (1) actuates the level sensors (9) in order to produce a continuous measurement of the level of the dielectric liquid of the transformer.

6. Device for protection as claimed in Claim 5, characterised in that the continuous measurement of the level of the dielectric is associated with a measurement of the speed of variation of the said level from the elapsed time between two successive positions of the float (11), this time being measured by an electronic clock situated in the electronic assembly (1).

7. Apparatus for protection as claimed in any one of Claims 4 to 6, characterised in that the said means for continuous measurement include an electronic sensor (2) for the temperature of the dielectric liquid of the transformer, situated at the lower end of the vertical printed circuit (3).

8. Apparatus for protection as claimed in any one of the preceding claims, characterised in that it includes means (12) for measuring the secondary current of the transformer, the measured secondary current intensity being associated with the measurement of the time during which this intensity is applied, in such a way as to differentiate the tolerable overcurrents from those which are dangerous for the transformer.

9. Apparatus for protection as claimed in any one of the preceding claims, characterised in that it includes means for continuous measurement of the pressure of the dielectric liquid of the transformer in the form of an electronic pressure sensor (7) fixed under a base of the upper part (4) and situated in the lower part (8) intended to communicate with the interior of the transformer.

10. Apparatus for protection as claimed in any one of the preceding claims, characterised in that the electronic assembly (1) includes electronic means for storage of the measurements of parameters carried out continuously, means for displaying the stored data disposed on the apparatus, including a control keypad (14), a display (15) and light-emitting diodes (20) corresponding to each of the measured parameters, and means (16, 17) for connection to the external peripherals for display and processing of the stored data.
